# EUROPEAN PATENT APPLICATION

(11) **EP 1 215 263 A2**
(43) Date of publication of application: **19.06.2002**
(21) Application number: 01130090.2
(22) Date of filing: 18.12.2001
(51) Int. Cl.: C09K 11/02, C09K 11/61, C09K 11/58

(54) **Preparation of high-brightness, long life, moisture resistant electroluminescent phosphor**

(30) Priority: 18.12.2000 US 256280 P; 29.09.2001 US 968156
(71) Applicant: OSRAM SYLVANIA INC., Danvers, MA 01923 (US)
(72) Inventor: Vaddi, Butchi Reddy, Sayre, PA 18840 (US); Fan, Chen-Wen, Sayre, PA 18840 (US)
(74) Representative: Grünecker, Kinkeldey, Stockmair & Schwanhäusser Anwaltssozietät

(57) **Abstract**

A long-life, high-brightness, moisture-resistant electroluminescent phosphor comprising a base phosphor having the general formula ZnS;Cu,Cl,Au and having a moisture-resistant coating thereon, said coating being selected from the group consisting of a metal nitrides or metal oxide/hydroxides.

## Description

This application claims priority from Provisional Patent Application No. 60/ , , filed 12/18/00.

### TECHNICAL FIELD

This Invention relates to electroluminescent phosphors and particularly to high brightness, encapsulated, moisture resistant electroluminescent phosphor.

### BACKGROUND ART

Phosphors are a known class of materials that emit electromagnetic radiation, usually in the visible region of the spectrum, upon excitation by another form of energy. Phosphors are usually named for the type of energy to which they susceptible. For example, cathodoluminescent phosphors are excited to emission by impingement of electrons or cathode rays; photoluminescent phosphors are excited to emission by impingement of actinic radiation; x-ray phosphors by the impingement of x-rays; and electroluminescent phosphors by the action of an electric field, usually supplied by an alternating current. It is with the latter type of phosphor that this invention is most particularly concerned.

Commercial electroluminescent phosphors are mostly based upon a host material of zinc sulfide activated by one or more activators among which are copper and/or manganese and/or chloride, which are incorporated into the host structure. These phosphors have uses as lamps or illuminating sources for readout devices or watch faces. Two basic kinds are employed, one in which the phosphor is dispersed in an organic binder and laminated in plastic, and a second variety in which the phosphor is dispersed in a ceramic dielectric and fused to a metal plate.

The plastic variety is the more economical; however, the light output of the phosphor encased in an economical plastic such as Mylar™ degrades rapidly, because moisture can penetrate the plastic and have a deleterious effect on the phosphor, severely shortening their life. The lifetime of such phosphors is measured by the half-life. (The half-life of a phosphor is that point in time when its light output is reduced by half from some initial light output, usually measured at 24 hours).

To further increase the life of the electroluminescent phosphors it is known to encapsulate individual phosphor particles with a continuous, conformal, dielectric, moisture-inhibiting material that allows the use of the phosphor in more moisture intense environments.

For example, U.S. Patent No. 6,064,150 teaches an electroluminescent phosphor having thereon a coating of aluminum nitride or aluminum nitride amine. Other coatings have included aluminum oxide hydroxide. An instance of the latter is disclosed in S.N. 09/153,978, filed September 16, 1998 and assigned to the assignee of this invention.

### DISCLOSURE OF INVENTION

It is, therefore, an object of the invention to obviate the disadvantages of the prior art.

It is another object of the invention to enhance operation of electroluminescent phosphor.

These objects are accomplished, in one aspect of the invention, by the provision of a long-life, high-brightness, moisture-resistant electroluminescent phosphor comprising a base phosphor having the general formula ZnS;Cu,Cl,Au and having a moisture-resistant coating thereon, said coating being selected from the group consisting of a metal nitride or a metal oxide/hydroxide.

### BEST MODE FOR CARRYING OUT THE INVENTION

The phosphor samples, which have a small particle size leading to high-brightness, were prepared as follows:

Appropriate amounts of chloride-doped ZnS are mixed with suitable amounts of CuSO₄, a primary activator of ZnS-Au mix, ZnO, and flux materials such as BaCl₂, MgCl₂, and NaCl to form a blend. The flux comprises about 3% BaCl₂, 3% MgCl₂, and 2% NaCl, based on the weight of the ZnS(Cl) raw material. The proper weights are shown in Table I.

The blends were fired in covered crucibles at 1205°C for 5 ¼ hours or at 1160°C for 3 ½ hours, depending upon the desired particle size for the finished phosphor. Lower firing temperature results in smaller particle size phosphor. The fired cakes were removed from the furnace and water washed to remove residual flux materials. The water-washed material was dried and then subjected to slight mechanical work damage for about 1 ½ hours to induce the formation of hexagonal ZnS to cubic ZnS. Normal processing for mechanical work damage of electroluminescent phosphor involves about 50 pounds of material for about 1 ¼ hours to about 1 ¾ hours. The sample designated ELB765 in the subsequent Tables was made under these conditions and is used as a control. The material at this stage is mostly inactive.

Every 10 pounds of this material was then blended with 1159 grams of zinc sulfate, and 113.5 grams of copper sulfate, placed in boats and fired in an electric furnace for about 2 ¼ hours at 730°C. This step converts the remaining hexagonal ZnS into cubic ZnS, which is mostly active electroluminescent material. After firing, the boats were removed from the furnace, cooled to room temperature, and the cakes were blended together and washed with deionized (DI) water. After two or three DI water washes the material was washed with acetic acid to remove unreacted ZnO and some of the unincorporated copper oxide. The acid washed material was again washed at least twice with DI water, and then washed with KCN to remove most of the superficial copper from the phosphor material. After the wash, the phosphor turns to a light body color from the dark gray body color it had before the KCN wash. The phosphor was again washed with DI water, filtered, dried and sieved through a - 400 mesh stainless steel sieve. This material was formed into batches and submitted for lamp evaluation and particle size measurement. Table I provides compositional information. The general formulation for the composition of the present invention is written as Zn₁₋ₓ₋ _{y}CuₓAu_{y}S₁₋ₐCl₂₋ₐ

**TABLE I**

| | | | | |
|---|---|---|---|---|
| Raw Material | 47859A | 47859B | 47859C | 47859D |
| ZnS(Cl) | 15.9 kg | 15.8 kg | 15.6 kg | 15.6 kg |
| CuSO₄ anhyd. | 33.88 gm | 33.88 gm | 33.88 gm | 33.88 gm |
| BaCl₂ | 477.4 gm | 477.4 gm | 477.4 gm | 477.4 gm |
| MgCl₂ (dried) | 477.4 gm | 477.4 gm | 477.4 gm | 477.4 gm |
| NaCl | 317.8 gm | 317.8 gm | 317.8 gm | 317.8 gm |
| Sulfur | 1269.8 gm | 1269.8 gm | 1269.8 gm | 1269.8 gm |
| ZnO | 79.10 gm | 79.10 gm | 79.10 gm | 79.10 gm |
| ZnS-Au-Mix131x20 | 0.00 | 117.6 | 235.2 | 294.1 |
| 1^{st} Firing Temp., °C | 1160 | 1160 | 1160 | 1160 |
| Firing Time | 3.5 hours | 3.5 hours | 3.5 hours | 3.5 hours |
| Approx. Au wt% | 0.00 | 0.004 | 0.008 | 0.01 |

The material described above is known as first-step-fired material. The process is continued by taking first-step-fired material and mixing with 17.7 gm of CuSO₄ • 5H₂O and 115 gm of ZnSO₄ • 7H₂) per every 1.0 pound of first-step-fired material. This material was then loaded into crucibles or Pyrex containers and fired at 730°C for 2 ¼ hours. The material was then cooled, washed with acetic acid, washed with water and then with KCN. Preferably, all washings occur with agitation.

A second series of samples was also synthesized under the same conditions to evaluate repeatability. The performance of these materials was measured in electroluminescent phosphor lamps at room temperature, 100V/400 Hz and 50% relative humidity. These data are shown in Tables II and III.

**TABLE II**

| Prodn. No. | Au wt.% | 2 hr. Brt. fL | 24 hr. Brt. fL | 100 hr. Brt. fL | Maint.% | Efficacy, Lm/w | Particle Size, x -100 | Color x | Color y | ½ life, hours |
|---|---|---|---|---|---|---|---|---|---|---|
| 47859A | 0 | 33 | 30.8 | 26.4 | 85.71 | 3.68 | 22.56 | 0.191 | 0.463 | 776 |
| 47859B | 0.004 | 30.8 | 29.9 | 26.8 | 89.63 | 2.90 | 23.47 | 0.191 | 0.462 | 981 |
| 47859C | 0.008 | 33.98 | 32.7 | 29.3 | 89.60 | 3.49 | 23.23 | 0.189 | 0.443 | 996 |
| 47859D | 0.010 | 38.35 | 34.9 | 30.05 | 86.10 | 3.97 | 23.17 | 0.186 | 0.432 | 909 |
| ELB765 | 0 | 32.1 | 29.6 | 24.2 | 81.76 | 3.17 | 30.00 | 0.190 | 0.446 | 524 |

**TABLE III**

| Prodn. No. | Au wt.% | 2 hr. Brt. fL | 24 hr. Brt. fL | 100 hr. Brt. fL | Maint.% | Particle Size, x -100 | Color X | Color Y | ½ life, hours |
|---|---|---|---|---|---|---|---|---|---|
| 47858A | 0 | 38.3 | 34.9 | 30.22 | 86.60 | 23.02 | 0.193 | 0.464 | 785 |
| 47858B | 0.004 | 37.0 | 34.1 | 29.9 | 87.68 | 22.99 | 0.192 | 0.458 | 860 |
| 47858C | 0.008 | 38.7 | 35.9 | 30.7 | 85.51 | 22.74 | 0.185 | 0.420 | 682 |
| 47858D | 0.010 | 38.35 | 31.3 | 28.0 | 89.45 | 23.81 | 0.188 | 0.443 | 934 |
| ELB765 | 0 | 32.1 | 27.8 | 22.6 | 81.29 | 30.00 | 0.189 | 0.443 | 471 |

Representative samples from the above phosphors were encapsulated using chemical vapor deposition techniques to deposit a thin film of an aluminum-containing compound on individual phosphor particles. The results are shown in Tables IV and V.

Table IV shows the results of phosphors coated with an aluminum oxide/hydroxide coating by a process disclosed in U.S. Patent application S.N. 09/153,978, filed 09/16/98. Table V shows the results of phosphors coated with an aluminum nitride coating by the process disclosed in U.S. Patent No. 6,064,150. The aluminum oxide/hydroxide coated phosphors are designated TNE in Table IV and the aluminum nitride coated phosphors are designated ANE in Table V.

For each of the TNE oxide/hydroxide coated phosphors, 3.0 kg of the designated phosphor particles were suspended in a 2" diameter, fluidized bed reactor and exposed to a trimethyl aluminum precursor in an inert carrier at a bed temperature of 180°C. An oxidizing atmosphere of oxygen and ozone was prepared by passing oxygen through an ozone generator to create a gas having 6% ozone. The oxidizing gas was fed into the reactor to react with the trimethyl aluminum vapor to form a continuous coating on the phosphor particles. The coating process was carried on for 40 hours. Samples were collected from the reactor for lamp tests and the results are shown in Table IV.

For the aluminum nitride coating, 0.6 kg of phosphor particles were charged into a 1" diameter fluidized bed reactor and heated to 175°C. An organometallic reactant of hexakisdimethylamidodialuminum and a reducing agent of anhydrous ammonia were introduced into the reactor to form an aluminum nitride coating on the surface of each of the phosphor particles. The coating time was 40 hours. The results of lamp tests made from these coated phosphors are shown in table V.

**TABLE IV**

| Prodn. No. | Coated No. | Efficacy, Lm/w | 24 hr. Brt. fL | 100 hr. Brt. fL | Main. % | ½ life, hours | Color X | Color Y |
|---|---|---|---|---|---|---|---|---|
| 47858A | Base | | 34.9 | 30.22 | 86.60 | | 0.193 | 0.464 |
| TNE | 34711-28A | 5.63 | 28.7 | 27.4 | 95.5 | 1381 | 0.192 | 0.469 |
| TNE | 34711-28F | 5.41 | 25.4 | 24.4 | 96.1 | 1850 | 0.191 | 0.468 |
| 47858C | Base | | 35.9 | 30.7 | 85.5 | | 0.185 | 0.420 |
| TNE | 34711-29A | 5.51 | 29.5 | 28.1 | 95.3 | 1402 | 0.187 | 0.428 |
| TNE | 34711-29F | 5.55 | 25.9 | 24.3 | 93.8 | 1212 | 0.185 | 0.421 |
| 47859D | Base | | 34.9 | 30.5 | 87.4 | | 0.186 | 0.432 |
| TNE | 34711-30A | 5.88 | 29.4 | 28.1 | 95.6 | 1681 | 0.187 | 0.446 |
| TNE | 34711-30F | 5.57 | 29.9 | 28.5 | 95.3 | 1843 | 0.187 | 0.446 |

**TABLE V**

| Prodn. No. | Coated No. | Efficacy, Lm/w | 24 hr. Brt. fL | 100 hr. Brt. fL | Main. % | ½ life, hours | Color X | Color Y |
|---|---|---|---|---|---|---|---|---|
| 47858A | Base | | 34.9 | 30.22 | 86.60 | | 0.193 | 0.464 |
| ANE | 34711-21A | 5.58 | 24.3 | 22.5 | 92.6 | 1047 | 0.192 | 0.471 |
| ANE | 34711-21F | 6.40 | 21.0 | 19.8 | 94.3 | 1432 | 0.182 | 0.471 |
| 47858C | Base | | 35.9 | 30.7 | 85.5 | | 0.185 | 0.420 |
| ANE | 34711-22A | 6.00 | 22.2 | 20.7 | 93.2 | 969 | 0.186 | 0.419 |
| ANE | 34711-22F | 5.93 | 20.9 | 19.8 | 94.7 | 1150 | 0.187 | 0.417 |
| 47859D | Base | | 34.9 | 30.5 | 87.4 | | 0.186 | 0.432 |
| ANE | 34711-23B | 5.69 | 22.4 | 20.7 | 92.4 | 969 | 0.189 | 0.454 |
| ANE | 34711-23F | 6.10 | 22.6 | 21.7 | 96.0 | 1574 | 0.189 | 0.452 |

The exceptional brightness and longevity of these small particle size, coated phosphors is clearly illustrated in the Tables. Half-lives of the order of from 969 hours to 1850 hours are exceptional when compared with the prior values which range from 471 hours to a maximum value of about 996 hours.

While there have been shown and described what are at present considered to be the preferred embodiments of the invention, it will be apparent to those skilled in the art that various changes and modification can be made herein without departing from the scope of the invention as defined by the appended claims.

## Claims

1. A long-life, high-brightness, moisture-resistant electroluminescent phosphor comprising a base phosphor having the general formula ZnS;Cu,Cl,Au and having a moisture-resistant coating thereon, said coating being selected from the group consisting of a metal nitride or a metal oxide/hydroxide.

2. The long-life, high-brightness, moisture-resistant phosphor of Claim 1 wherein said base phosphor has a particle size between 22 and 24 microns.

3. The long-life, high-brightness, moisture-resistant phosphor of Claim 2 wherein said phosphor has x and y color coordinates where the x coordinate is between 0.185 and 0.193 and the y coordinate is between 0.417 and 0.471.

4. The long-life, high-brightness, moisture-resistant phosphor of Claim 3 wherein the half-life of said phosphor is between 969 and 1843 hours.
